# EUROPEAN PATENT SPECIFICATION

(11) **EP 3 883 214 B1**
(45) Date of publication and mention of the grant of the patent: **06.09.2023**
(21) Application number: 20305294.9
(22) Date of filing: 20.03.2020
(51) Int. Cl.: H04L 67/12, H04L 69/18

(54) **A METHOD FOR IMPLEMENTING AN INDUSTRIAL COMMUNICATION GATEWAY**
VERFAHREN ZUR IMPLEMENTIERUNG EINES INDUSTRIELLEN KOMMUNIKATIONS-GATEWAYS
PROCÉDÉ DE MISE EN OEUVRE D'UNE PASSERELLE DE COMMUNICATION INDUSTRIELLE

(43) Date of publication of application: 22.09.2021
(73) Proprietor: Mitsubishi Electric R&D Centre Europe B.V., 1119 NS Schiphol Rijk Amsterdam (NL); Mitsubishi Electric Corporation, Tokyo 100-8310 (JP)
(72) Inventor: ROLLET, Romain, 35708 Rennes Cedex 7 (FR)
(74) Representative: Plasseraud IP

(56) References cited:
- PFROMMER JULIUS ET AL: "Open Source OPC UA PubSub Over TSN for Realtime Industrial Communication", 2018 IEEE 23RD INTERNATIONAL CONFERENCE ON EMERGING TECHNOLOGIES AND FACTORY AUTOMATION (ETFA), IEEE, vol. 1, 4 September 2018 (2018-09-04), pages 1087-1090, XP033426010, DOI: 10.1109/ETFA.2018.8502479 [retrieved on 2018-10-22]

## Description

### DOMAIN

The disclosure belongs to the field of telecommunications.

In particular, methods for interconnecting network domains are disclosed hereinafter, as well as computer readable storage media, computer programs and gateway devices implementing such methods.

### BACKGROUND

Many industrial systems are based on field-bus running proprietary communication protocols.

Several industrial communication protocols are presented hereafter with their associated usage and real-time constraints. The following Industrial use cases requires deterministic real-time communication capabilities.

For laser-cutting machinery, cyclic communication between controllers with a cycle time of 1 ms is required during operation. As this communication is used for control tasks, the latency and jitter must be minimal. Besides critical communication, there is also non-critical cyclic and event-based communication such as visual data.

A package/parcel identification and handling system needs to exchange data with cameras and RFID systems as well as with programmable logic controllers (PLC) for sorting tasks during regular operations. The data exchange is event-based (up to 18 events per second) and defined by the presence of a parcel. As this communication is used for control tasks, a minimal latency (100 ms) is required. Non-critical cyclic and event-based communication is also performed.

For laser range measuring applications, laser range sensors cyclically exchange data with a central controller or actuator. In this case, a cycle time of 10 ms is required, resulting in a data volume of 15 MB per second. Time synchronization is required for coordinating the measurements from the various sensors.

The exchange of safety-related data is performed using a safety protocol. This protocol makes use of a black channel communication layer, meaning that there are components in the communication path that have no safety-related design. Therefore, the response message from the partner device has to be received within a defined time frame. If the worst-case transmission delay time has expired, the machine will transition into a safe state. The bi-directional data exchange is performed cyclically based on a deterministic timing.

With the introduction of Ethernet TSN, the latest evolutions of those protocols may be based on an Ethernet TSN link layer providing deterministic access, low latency/jitter even in complex network topologies supporting network data flow with different Quality Of Service (QoS) requirements.

TSN is the IEEE 802.1 defined standard technology to provide deterministic messaging on standard Ethernet. The key to providing on-time delivery of TSN frames is 802.1Qbv. Qbv defines a means to transmit certain TSN Ethernet frames on a schedule, while allowing non-TSN Ethernet frames to be transmitted on a best effort basis around the TSN frames. Because all network nodes are synchronized, Qbv can deliver critical communication very quickly and with a very low jitter in delivery.

The different TSN standards defined by IEEE 802.1 group can be grouped in three basic key component categories:
- Time synchronization: time in TSN networks is usually distributed from one master source to all the network nodes. In most cases, this is done using the Precision Time Protocol which utilizes Ethernet frames to distribute time synchronization information.
- Scheduling and traffic shaping: Scheduling and traffic shaping allows for the coexistence of different traffic classes with different priorities on the same network. TSN enhances standard Ethernet communication by adding mechanisms to ensure timely delivery with soft and hard real-time requirements.
- Selection of communication paths, path reservations and fault-tolerance mechanisms.

Focusing on the scheduling component, for each priority, a user can select from different access control and scheduling mechanisms how Ethernet frames are processed. Thereby, some priority can be assigned to already existing methods (such as the IEEE 802.1Q strict priority scheduler) or some new processing methods, such as the TSN IEEE 802.1Qbv time-aware traffic scheduler.

The IEEE 802.1Qbv time-aware scheduler has been designed to separate the communication on the Ethernet network into fixed length, repeating time cycles. Within these cycles, different time slices can be configured that can be assigned to one or several of Ethernet priorities. Thank to that mechanism, it is possible to grant exclusive use to the Ethernet transmission medium for those traffic classes that have stringent real-time constraints. This exclusive access eliminates buffering effects in the Ethernet switch transmission buffers and time-critical traffic can be transmitted without non-deterministic interruptions. Time slices can be considered as virtual communication channels, and enables the separation of time-critical communication from non-critical background traffic.

OPC UA (also known as IEC 62541) is a M2M and process communication protocol and represents a major evolution from the OPC communication standards targeting embedded usage.

The original OPC UA data exchange via client/server scheme is not very efficient for implementing the listed Real-Time (RT) use cases. As a consequence, the OPC Foundation developed a new OPC UA Publisher/Subscriber communication model which addresses these requirements. It is based on multicast and broadcast messages to address multipoint and deterministic communication.

The OPC UA foundation has proposed the PubSub extension targeted to support some industrial Real-Time (RT) use cases.

This evolution aimed at embedded devices, optimizing performance in small footprints. It adds a meta model for describing data, as well as a communication infrastructure for exchanging and browsing information. Additionally, OPC UA comes with a built-in security model that helps implement secure systems in accordance with upcoming standards like IEC 62443.

The OPC UA Publisher/Subscriber communication scheme (PubSub) is based on multicast and broadcast messages to address multipoint and deterministic communication. It is also able to support Ethernet TSN as a Link layer.

The OPC UA Publisher/Subscriber communication model defines the exchange of messages between a publisher and a list of subscribers within a distributed architecture. For this exchange to take place, an appropriate infrastructure is required which allows publishers to send messages without knowing what, if any, subscribers may exist. Similarly, subscribers communicate with this infrastructure to express their interest in certain types of messages, only receiving messages that are of interest without knowing what, if any, publishers there are.

Depending on the specific use case, different implementations of the OPC UA Publisher/Subscriber communication model are possible using different protocol stacks and different data encoding (binary, JSON, XML) for protocol headers. For instance, it may use UADP binary protocol to encode OPC UA Pubsub message with encryption, conveyed by either UDP/multicast IP or multicast TSN Ethernet as illustrated in the figure below. OPC UA PubSub also defines protocol mapping to Message Queue protocols such as MQTT or AMQP.

The OPC UA PubSub model is adapted to provide real-time cyclic message delivery service. Application payload of PubSub communication model relies on DataSet, that is basically a list of name and value pairs representing a list of Variable/Values. Compared to proprietary industrial communication protocols such as CC-Link IE or Profinet/RT, OPC UA provides much more flexibility and can support a large number of built-ins data types.

DataSet are published by OPC UA Publisher through OPC UA PubSub DataSetMessage messages and is included as application payload.

OPC UA provides different data representation mode for published DataSet. Among them, the RawData representation is basically similar the concatenation of data fields. Using this representation requires the transmitter announce the data format (called DataSetMetaData) before starting cyclic data message emission.

Currently, it is difficult to interconnect industrial field-bus based on different communication systems because they use different industrial communication protocols and information models, even if they are running on the same link layer (Ethernet TSN). Document: PFROMMER JULIUS ET AL: "Open Source OPC UA PubSub Over TSN for Realtime Industrial Communication",2018 IEEE 23RD INTERNATIONAL CONFERENCE ON EMERGING TECHNOLOGIES AND FACTORY AUTOMATION (ETFA), IEEE, vol. 1, 4 September 2018 (2018-09-04), pages 1087-1090, XP033426010,DOI: 10.1109/ETFA.2018.8502479 investigates how the Time-Sensitive Networking (TSN) extension of the Ethernet standards can be used for the transport of OPC UA PubSub messages in practice. It proposes an approach where the message for the publisher is prepared in a (hardware-triggered) interrupt.

So, there is a need for a conversion method to convert the applicative layer of proprietary communication protocols running over Ethernet TSN, and also the underlying information models.

Such a method shall allow the integration of devices in a transparent way, so that it does not require to modify the programming of devices in the interconnected field-bus system.

In particular, the memory mapping and the time synchronization should be kept unmodified.

Such a method shall be deployable, for example, in an industrial Ethernet gateway to interconnect a proprietary Ethernet industrial protocol with an interoperable protocol.

Indeed, with the emergence of Industry 4.0, manufacturers shall support interoperable protocols (e.g. OPC UA), to be integrated in a platform independent service-oriented architecture. Such a method allows the cohabitation of devices and applications supporting different communication protocols based on a single Ethernet TSN Link layer.

### SUMMARY

The invention is defined by the appended independent claims. Additional features and advantages of the concepts herein disclosed are set forth in the description which follows.

The present disclosure aims at improving the situation.

To this end, the present disclosure describes a method for interconnecting a primary network domain (PND) with a secondary network domain (SND) through a gateway device (GW), wherein:
- the primary network domain (PND) is implemented in an industrial communication system comprising a master device associated to a master address,
- the secondary network domain (SND) is implemented in a communication system using a OPC UA PubSub communication protocol and comprising a physical OPC UA device comprising a physical subscriber module,
- the gateway device is equipped with a processing unit (CPU) operably connected to a memory (MEM) and to a communication interface (CI) with the primary network domain (PND) and with the secondary network domain (SND), and
- the method comprises:
   ∘ emulating an industrial communication device using the gateway device, the emulated device comprising:
      ▪ a virtual slave module associated to a virtual slave address in the primary network domain (PND), the virtual slave module comprising a first memory structure located into the memory (MEM), and
      ▪ a virtual OPC UA publisher module associated to a virtual OPC UA publisher identifier in the secondary network domain (SND) and to an internal OPC UA information model stored into a second memory structure located in the memory (MEM),
   ∘ using the virtual slave module, receiving from the primary network domain (PND) at least one primary message comprising the master address as a primary network domain (PND) source address, the virtual slave address as a primary network domain (PND) destination address and a primary data payload,
   ∘ for each received primary message, using the emulated device, processing said received primary message to store the primary data payload in the second memory structure according to the internal OPC UA information model,
   ∘ using the virtual OPC UA publisher module, generating a publisher message comprising the virtual OPC UA publisher identifier and each stored primary data payload according to the internal OPC UA information model, and
   ∘ using the communication interface, transmitting the generated publisher message through the secondary network domain (SND) to the physical subscriber module.

Such a method allows transmitting a data payload, received in a message generated by a master device in a primary network domain relying on any proprietary protocol and information model, to any industrial communication device in a secondary network domain relying on the opened communication system as defined by the OPC UA PubSub specification.

Unlike existing methods that are not adapted to the support of heterogeneous industrial Ethernet and OPC UA, such a method relies on the definition of a virtual device inside the gateway. Of course, multiple devices may be supported and emulated at the same time. For example, each physical device of the secondary network domain may be mapped to a virtual device belonging to the primary network domain and vice versa.

Such a method allows a generic translation method for interconnecting one or several real-time industrial communication systems, relying on proprietary protocols and information models, with the opened communication system as defined by the OPC UA PubSub specification.

Such a method allows for example supporting protocols having a wide variety of working schemes and/or a wide variety of information models.

Such a method further allows aggregating primary data payloads from a plurality of received primary messages before generating a publisher message comprising the aggregated primary data payload.

Optionally, the first memory structure comprises a description of aplurality of memory partitions,
- each memory partition being mapped to a corresponding remote resource in the primary network domain (PND),
- each memory partition being further mapped to a corresponding reference into the internal OPC UA information model stored in the second memory structure , and
- processing said received primary message comprises decoding the primary data payload, using the description of the set of memory partitions, to store the primary data payload in the second memory structure according to the internal OPC UA information model.

Unlike existing protocol conversion methods, a transparent and universal scheme is provided so that devices (and controllers) from one network domain may communicate safely with devices of another domain as they were all in a single domain whatever the communication protocols and the related information models are. Transparency means that no specific address/data mapping is required into the existing devices. So, no program modification is required inside the different involved controllers.

As each virtual device may fully emulate the corresponding physical device in the attached network domain, the device emulation may provide the same functionality as a physical device meaning: Input/Output (IO) states and memory register synchronization, alarm/event generation and signalling support to provide control and management services (discovery/configuration/monitoring...).

Optionally:
- the physical subscriber module being configured to identify a source of a received publisher message incorporating a publisher identifier based on the incorporated publisher identifier,
- the virtual OPC UA publisher identifier associated to the virtual OPC UA publisher module in the secondary network domain (SND) is specific to the virtual OPC UA publisher module.

It is thus possible, provided the addressing plan is coherent between both the primary network domain (PND) and the secondary network domain (SND), to identify the emulated device in both domains based on a single identifier that is specific to the emulated device.

Optionally:
- the physical subscriber module being configured to identify a source of a received publisher message incorporating a publisher identifier and a writer identifier based on the incorporated publisher identifier and on the incorporated writer identifier,
- the virtual OPC UA publisher identifier associated to the virtual OPC UA publisher module in the secondary network domain (SND) is specific to the gateway device, and
- the generated publisher message further comprises a writer identifier specific to the virtual OPC UA publisher module.

It is thus possible to identify the emulated device in both the primary network domain (PND) and the secondary network domain (SND) while allowing independent address plans for both domains, in order to let more flexibility for deploying devices in both domains.

Optionally:
- the communication interface is configured to allow communication according to a schedule comprising a plurality of first time windows, reserved for communication through the primary network domain (PND), a plurality of second time windows, reserved for communication through the secondary network domain (SND), each first time window being separated from the previous and from the next second time window by a non-reserved time window,
- each primary message is received using the virtual slave module from the primary network domain (PND) during a first reserved time window,
- each received primary message is processed before the beginning of the next second reserved time window,
- processing each said received primary message triggers generating the publisher message before the beginning of said next second reserved time window, and
- the generated publisher message is transmitted through the secondary network domain (SND) during said next second reserved time window.

For example, the first network domain may rely on a TSN Link layer having a first clock and a first cycle duration. The second network domain may also rely on a TSN Link layer, having a second clock and a second cycle duration.

In this example, the primary network domain may be interconnected with the secondary network domain even if the first and second clocks are not synchronized and/or the first and second cycle durations are different.

Optionally:
- the communication interface is configured to allow communication according to a schedule comprising a plurality of first time windows, reserved for communication through the primary network domain (PND), a plurality of second time windows, reserved for communication through the secondary network domain (SND), each first time window being separated from the previous and from the next second time window by a non-reserved time window,
- each primary message is received using the virtual slave module during a first reserved time window,
- each received primary message is processed before the beginning of the next second reserved time window,
- generating the publisher message is triggered during said next second reserved time window, and
- the generated publisher message is transmitted through the secondary network domain (SND) during said next second reserved time window.

In this example, the primary network domain may be interconnected with the secondary network domain even if the first and second clocks are not synchronized and/or the first and second cycle durations are different.

Moreover, a faster message generation is allowed since the building of the publisher message is spread over the whole cycle.

Moreover, it is not strictly required to define a timer triggered by the network clock since the publisher message may be prepared immediately after the reception of the last message coming from the primary network domain conveying data that are to be included into the publisher message.

Optionally:
- the physical OPC UA device further comprises a physical publisher module associated to a OPC UA publisher identifier,
- the emulated device further comprises a virtual OPC UA subscriber module associated to the internal OPC UA information model, and
- the method further comprises:
   ∘ using the virtual OPC UA subscriber module, receiving at least one secondary subscriber message comprising the OPC UA publisher identifier and a secondary data payload,
   ∘ for each received secondary subscriber message, using the emulated device, processing said received secondary subscriber message to store the secondary data payload in the second memory structure according to the internal OPC UA information model,
   ∘ generating, using the virtual slave module, a virtual message comprising the virtual slave address as a primary network domain (PND) source address, the master address as a primary network domain (PND) destination address and an encoded data payload, derived from each secondary data payload stored into the second memory structure, and
   ∘ using the communication interface, transmitting the generated virtual message through the primary network domain (PND) to the master device.

In this example, a data payload in a message published by any industrial communication device in a secondary network domain relying on the opened communication system as defined by the OPC UA PubSub specification may be converted and transmitted to a master device in a primary network domain relying on any proprietary protocol and information model.

Optionally, processing said received secondary subscriber message comprises decrypting said received secondary subscriber message using an encryption key selected based on the OPC UA publisher identifier.

In this example, compatibility with security functions such as encryption and message authentication is ensured in particular in the secondary network domain (SND).

Optionally:
- the physical publisher module is further associated to a dataset writer identifier specific to the physical OPC UA device, and
- processing said received secondary subscriber message comprises:
   ∘ decoding the secondary data payload, using the virtual OPC UA subscriber module, based on the dataset writer identifier associated to the physical OPC UA device, and
   ∘ storing the decoded secondary data payload in the second memory structure according to the internal OPC UA information model.

Optionally:
- the first memory structure comprises a description of a plurality of memory partitions,
- each memory partition being mapped to a corresponding remote resource in the primary network domain (PND),
- each memory partition being further mapped to a corresponding reference into the internal OPC UA information model stored in the second memory structure, and
- generating the virtual message comprises encoding the stored secondary data payload, using the description of the plurality of memory partitions, into the encoded data payload.

In this example, the secondary data payload is incorporated in the internal OPC UA information model which allows further accumulating stored secondary data payloads in view of preparing a single PND message carrying the accumulated stored secondary data payloads.

Optionally:
- the communication interface is configured to allow communication according to a schedule comprising a plurality of first time windows, reserved for communication through the primary network domain (PND), a plurality of second time windows, reserved for communication through the secondary network domain (SND), each first time window being separated from the previous and from the next second time window by a non-reserved time window,
- each secondary subscriber message is received using the virtual OPC UA subscriber module during a second reserved time window,
- each received secondary subscriber message is processed before the beginning of the next first reserved time window,
- generating the virtual message is triggered during said next first reserved time window, and
- the generated virtual message is transmitted through the primary network domain (SND) during said next first reserved time window.

In this example, interconnection between protocols having different clock domains, and between industrial applications having different timing requirements regarding the length of the cycle period is supported.

Optionally:
- the communication interface is configured to allow communication according to a schedule comprising a plurality of first time windows, reserved for communication through the primary network domain (PND), a plurality of second time windows, reserved for communication through the secondary network domain (SND), each first time window being separated from the previous and from the next second time window by a non-reserved time window,
- each secondary subscriber message is received using the virtual OPC UA subscriber module during a second reserved time window,
- each received secondary subscriber message is processed before the beginning of the next first reserved time window,
- processing each received secondary subscriber message triggers generating the virtual message before the beginning of said next first reserved time window, and
- the generated virtual message is transmitted through the primary network domain (SND) during said next first reserved time window.

In this example, interconnection between protocols having different clock domains, and between industrial applications having different timing requirements regarding the length of the cycle period is supported.

Moreover, a faster message generation is allowed since the building of the publisher message is spread over the whole cycle.

Moreover, in this example it is not strictly required to define a timer triggered by a network clock since the publisher message may be prepared immediately after the reception of the last message coming from the primary network domain conveying data that are to be included into the publisher message.

The present disclosure also describes a computer-readable storage medium comprising instructions which, when executed by a processor of a specific mobile device, cause the processor to carry out any of the methods hereby described.

The present disclosure also describes a computer program comprising one or more stored sequence/s of instructions that is accessible to a processor and which, when executed by the processor, causes the processor to carry out any of the methods hereby described.

The present disclosure also describes a gateway device equipped with a processing unit (CPU) operably connected to a memory (MEM) and to a communication interface (CI) with a primary network domain (PND) and with a secondary network domain (SND), wherein:
- the primary network domain (PND) is implemented in an industrial communication system comprising a master device associated to a master address, and
- the secondary network domain (SND)is implemented in a communication system using a OPC UA PubSub communication protocol and comprising a physical OPC UA device comprising a physical subscriber module,
- the gateway device being configured to carry out any of the methods hereby described.

### BRIEF DESCRIPTION OF THE DRAWINGS

Figure 1 illustrates an example gateway device interconnecting two network domains in a communication system.
Figures 2 and 3 illustrate different example topologies of such communication system.
Figures 4 and 5 illustrate different example methods for interconnecting two network domains in a communication system.
Figure 6 illustrates an example schedule for carrying out such methods, and
Figure 7 illustrates example data payloads exchanged between entities in the communication system when carrying out such methods, and
Figure 8 illustrates an example structure of an emulated device.

### DETAILED DESCRIPTION

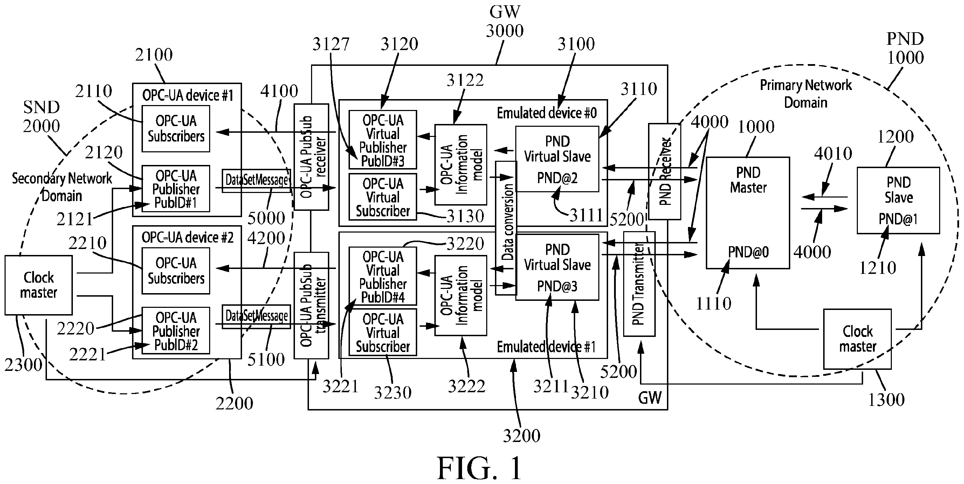

It is now referred to Figure 1 which illustrates a communication system.

The communication system comprises a primary network domain (PND) 1000 interconnected to a secondary network domain (SND) 2000 by means of a gateway device (GW) 3000.

The PND comprises a programmable logic controller (PLC) as a master device 1100 and one or more slave devices 1200.

The SND comprises a plurality of industrial communication devices 2100, 2200. The industrial communication devices are configured to communicate with each other, relying on a OPC UA Publisher/Subscriber communication scheme. As such, each industrial communication device 2100, 2200 comprises a OPC UA subscriber module 2110, 2210 and a OPC UA publisher module 2120, 2220.

Each domain may have its own addressing plan.

For instance, the master device 1100 may have a unique address PND@0 as an identifier 1110 in the PND 1000, while each slave device 1200 may further have a unique address PND@1 as an identifier 1210 in the PND 1000. Identifiers 1110, 1210 in the PND 1000 may be used to identify either the source or the target of a given message.

Moreover, each publisher module 2120, 2220 may have a publisher identifier PubID#1, PubID#2 as a source identifier 2121, 2221 in the SND 2000 for any publisher message from said publisher module 2120, 2220.

Communication through each domain 1000, 2000 may further be controlled by its own clock master 1300, 2300.

The gateway device 3000 is equipped with a processing unit (CPU) operably connected to a memory (MEM) and to a communication interface (CI) with the primary network domain (PND) 1000 and with the secondary network domain (SND) 2000.

The gateway device 3000 may be configured so as to provide, through data plane conversion, interconnection of the following functions provided by both primary and secondary network domains when each network domain relies on a Ethernet TSN Link layer:
- network device Input/Output (IO) states and memory registers synchronization, and
- network device alarm and event generation.

The gateway device 3000 may also implement the control plane in order to fully support the data plane function and also to allow the integration of the gateway device 3000 into the interconnected network domains. For instance, most industrial protocols support a discovery service that automatically detect attached devices, and allocates address.

Control plane specifications may be very different from one proprietary industrial communication system to another. OPC UA integrates a complete information model including device and data communication formal description. In some proprietary industrial communication systems, this kind of information may be completely managed by an external network configuration tool using some configuration files. So it may be required the gateway where is implemented the conversion method must be configured by a configuration tool specific to the communication system used in the PND 1000.

In particular, this tool shall define the IO/Memory Register mapping used for network device synchronization, and may be used by the gateway device 3000 to build the corresponding DataSetMetaData and created a PublishedDataSet inside the OPC UA PubSub information model. Unlike some proprietary protocols, OPC UA provides a function to get formal description of DataSet conveyed as application payload of DataSetMessages.

In this example, it is desirable that the master device 1100 in the PND may communicate with the industrial communication devices 2100, 2200 in the SND 2000 respecting predetermined real-time constraints.

In order to allow this communication, the gateway device 3000 emulates industrial communication devices so that they are identified both by the communication protocol of the PND and by the OPC UA communication protocol in the SND exactly as real physical devices.

Each emulated device 3100, 3200 includes:
- a virtual PND slave 3110, 3210 including functions to receive from and transmit to the PND master device 1100 messages across the PND,
- a virtual OPC UA publisher module 3120, 3220 including functions to build and transmit publisher messages (OPC UA PubSub DataSetMessage) to at least one OPC-UA subscriber device 2110, 2210,
- a virtual OPC UA subscriber module 3130, 3230 including functions to receive and interpret subscriber messages (OPC UA PubSub DataSetMessage) from at least one OPC UA Publisher device 2120, 2220,
- a first memory structure, as a part of the memory MEM of the gateway device 3000, used to store a description of a plurality of memory partitions, and
- a second memory structure, as a part of the memory MEM of the gateway device 3000, used to store a OPC UA information model dedicated to the emulated device 3100, 3200.

Each memory partition is mapped to some corresponding set of memory registers or IOs of a remote master device, named remote resource, in the primary network domain (PND) and to a corresponding reference into the internal OPC UA information model stored in the second memory structure.

Each virtual PND slave 3110, 3210 is associated to a virtual identifier 3111, 3211 specific to said virtual PND slave.

Each virtual OPC UA publisher module 3120, 3220 is associated to a virtual publisher identifier 3127, 3221 specific to said virtual OPC UA publisher module.

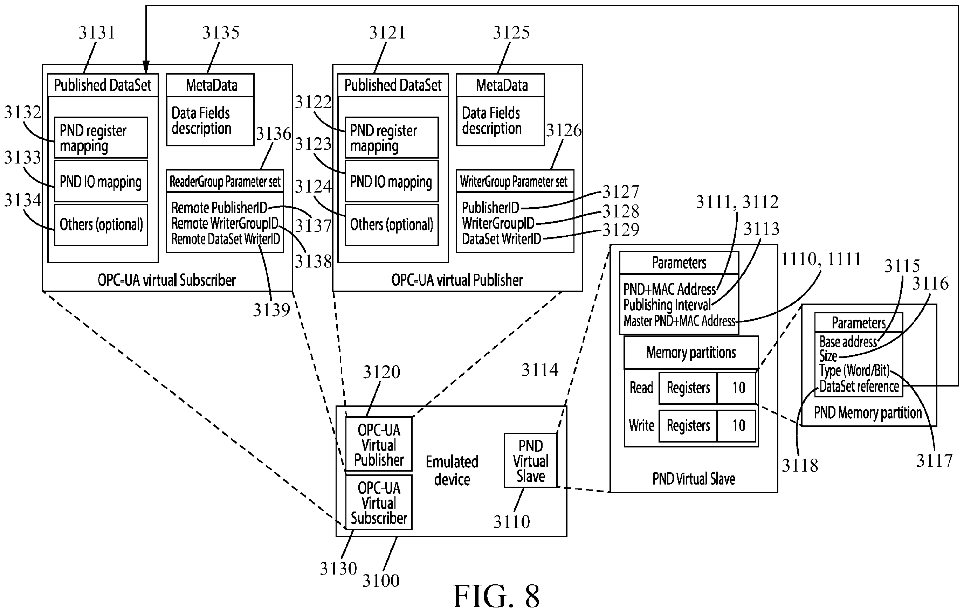

It is now referred to Figure 8, which illustrates in a more detailed fashion an example structure of an emulated device 3100.

For each managed virtual PND slave 3110, the gateway 3000 stores a set of parameters including:
- the virtual identifier 3111 as an address identifying the virtual PND slave 3110 in the PND 1000,
- optionally a Layer-2 Medium Access Control (L2-MAC) address 3112, for example randomly chosen, as a further type of address identifying the virtual PND slave 3110,
- a publishing interval 3113 (for example in µs) that may be configured in advance according to the clock master 1300 in the PND 1000, and
- the master PND and L2-MAC addresses 1110, 1111 for identifying the master device 1100 as being a source of an incoming message.

In many industrial Ethernet systems, the PND address is based on the IP address. The L2-MAC address 3112 may be defined for the purpose of L2-MAC address spoofing, that is to be used as the source L2-MAC address for frames emitted by this emulated device 3100, instead of using the L2-MAC address of the gateway 3000.

When receiving a PND data frame, the L2-MAC and PND destination addresses in the PND data frame are used to identify the virtual slave intended to receive the PND data frame. Then, the L2-MAC and PND source addresses are compared with the intended master L2-MAC and PND addresses 1111, 1110 to check if the PND data frame was emitted by the master device 1100. In some systems, a slave device may be allowed to receive frames from different master devices, so several values may be allowed.

The virtual PND slave may further comprise a description of a set of memory partitions 3114 defined to map IO and memory registers of the remote PND master 1100. Each memory partition 3114 may include a base address 3115, a size 3116, a type 3117 (memory register/IO/...) and a reference 3118 into an OPC UA dataset which will be defined later in this document. The reference 3118 may be used to copy data to/from the corresponding OPC UA dataset. The Base address 3115 and size 3116 are used to identify which PND resource is addressed upon PND frame reception.

For each managed virtual OPC UA publisher module 3120 and each managed subscriber module 3130, the gateway 3000 stores a corresponding dataset 3121, 3131 mapping remote resources including memory registers 3122, 3132 and remote I/O 3123, 3133 in the PND.

For example, Memory registers are n-bits values (usually 8, 16 or 32bits), while IOs are boolean (1-bit). Consequently, data attached to a memory partition is either array of n-bits values, or a bitmap table (encoded over a byte-stream).

For example, Memory registers may be simply mapped over a OPC-UA integer array (UINT8, UINT16 or UINT32 array). Because OPC-UA booleans are encoded over BYTE data type (8-bits), it may be required to expand bitmap to a byte array (bit-banding operation).

Other data 3124 can be optionally added to the datasets 3121. Moreover, OPC UA dataset metadata 3125, 3135 may be associated to each dataset 3121, 3131. Dataset metadata provide a description of a type of data included into the related dataset.

For each managed virtual OPC UA publisher module 3120, the gateway device 3000 stores a writer group parameter set, which is a list of identifiers for identifying the virtual OPC UA publisher module 3120 as being a source of an emitted publisher message. The list of identifiers, which is detailed later in this document, includes a virtual publisher identifier 3127, a virtual writer group identifier 3128 and a virtual data set writer identifier 3129 in accordance with OPC UA PubSub rules.

For each managed virtual OPC UA subscriber module 3130, the gateway device 3000 stores a reader group parameter set 3136, which is a list of identifiers for allowing reading received subscriber messages depending on their source. The list of identifiers, which is detailed later in this document includes a remote publisher identifier 3137, a remote writer group identifier 3138 and a remote data set writer identifier 3139.

When receiving a subscriber message from the SND 2000, a virtual OPC UA subscriber module 3130 must identify the related reader group 3136 by using the publisher identifier and the writer group identifier in a header of the received subscriber message. Once identified, a currently-in-use encryption key may be selected in an associated security group context, and the message may be decrypted and authenticated (MAC checked). Then, the data payload embedded in the subscriber message may be decoded according to the dataset metadata 3135 associated with the remote writer group identifier 3138 and the dataset writer identifier 3139. Decoded data may thus be transferred into the internal PubSub information model.

The gateway device 3000 may comprise one or several Ethernet TSN network interfaces. One network interface may support one or several industrial network domains with different protocols, and also legacy Ethernet network traffic.

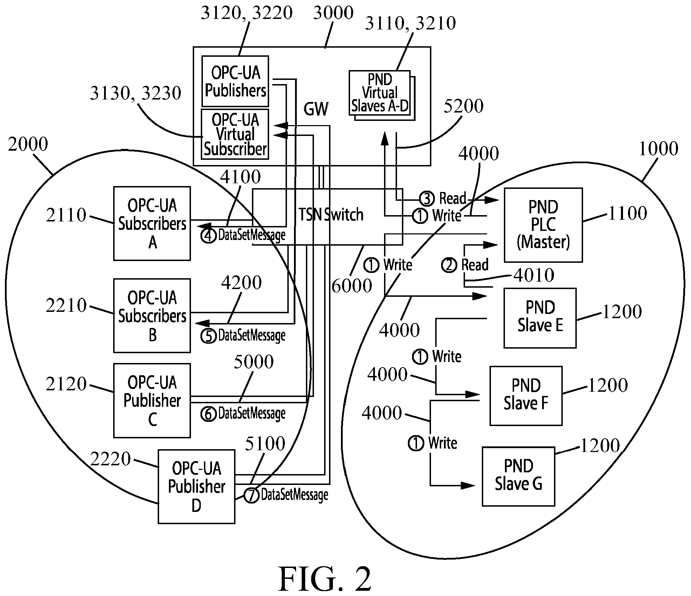

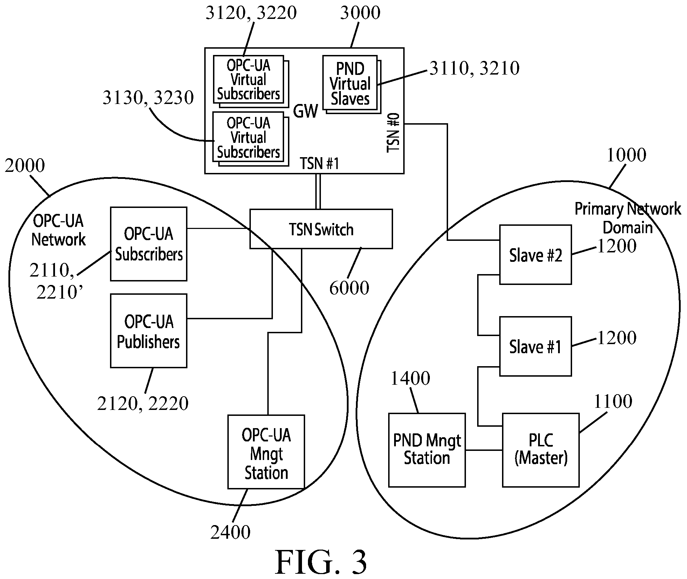

It is now referred to Figures 2 and 3, which illustrate two different possible network topologies that may be addressed, according to the number of physical Ethernet TSN interfaces supported by the gateway device 3000.

In the topology illustrated on Figure 2, both industrial network domains 1000, 2000 are mixed together on a single LAN and share the same network clock. Both network domains also use the same cycle duration. In this topology, any PND or OPC UA devices can be connected to a single network. For example, both industrial networks are distinguished by using different VLANs.

In this example, the primary network domain 1000 and the secondary network domain 2000 may be identified by their VLAN-ID. Some management stations can be located in any domain. All devices can be interconnected by an Ethernet TSN switch 6000.

Primary Network Domain (PND) devices 1200 can also be connected in a daisy-chained topology (i.e. a 2-port Ethernet cut-through switch is integrated in the device 1200). In the first figure, the PLC 1100 is located in the PND 1000 and is able to control PND slaves 1200 and OPC UA devices 2110, 2120, 2210, 2220. The gateway device 3000 emulates a set of PND virtual slaves 3110, 3210 on the PND side, and as OPC UA Virtual Publishers 3120, 3220 or Subscribers 3130, 3230 on the OPC UA side.

A single TSN cycle (i.e. 802. 1qbv) is defined for the whole network. A possible cycle configuration is to divide it in 4 parts with the first part dedicated to PND data frames (i.e. CC-Link IE TSN), the second to normal traffic (i.e. legacy Ethernet), the third to OPC UA frames, and the last one to normal traffic again. Insertion of period dedicated to normal traffic allows giving the most time to the gateway device 3000 for PND or OPC UA data frames processing and preparing.

In the topology illustrated on Figure 3, both industrial network domains 1000, 2000 are interconnected by the gateway device 3000 and are physically separated. If both domains shall share the clock domain (PTP when TSN is in use), so the gateway device 3000 shall also propagate PTP frames or acts as a transparent clock when IEEE 802.1AS is in use.

On the PND side, when daisy chain topology is chosen, one preferred configuration is to connect the gateway at the end of the daisy chain.

Two synchronized cycles are defined, one for each network domain. The cycle configurations are derived from the configuration defined for the single-network topology exposed in the previous section.

Of course, total bandwidth is greater than the bandwidth available in the single-network topology illustrated in figure 2. However, bandwidth dedicated to industrial bus shall stay identical in order to give the gateway 3000 enough time to process and prepare PND and OPC UA frames.

The gateway 3000 providing an interconnection between the PND 1000 and the SND 2000 means that a data payload may be transmitted from physical devices in the PND 1000 to physical devices in the SND 2000 and vice versa.

In other words, the gateway device 3000 includes functions to dispatch and trigger message transmission to and from the PND master controller 1100 and the OPC UA PubSub devices and modules 2110, 2210, 2120, 2220.

For pedagogical purposes, the processes for the one-way message transmission from the PND to the SND and for the one-way message transmission from the SND to the PND are hereafter described separately.

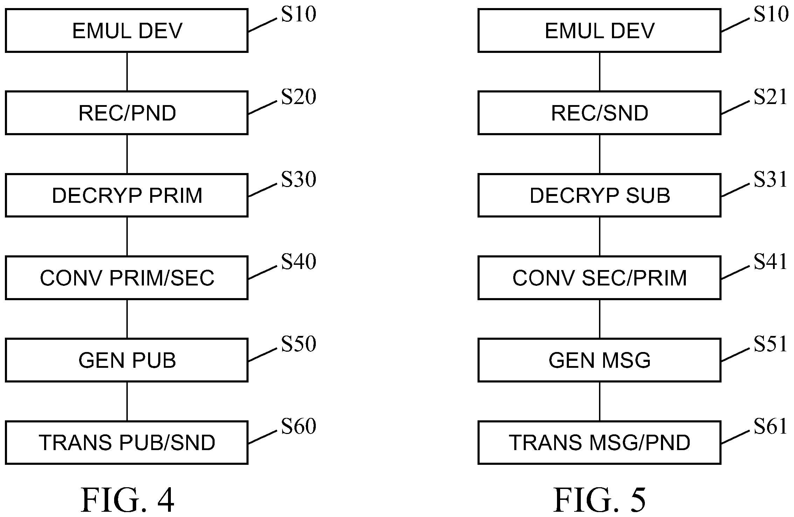

It is now referred to Figure 4, which illustrates, in the context of a communication system such as illustrated for example in any of Figures 1 to 3, a one-way transmission of a data payload from the master device 1100 in the PND to physical OPC UA subscriber modules 2110, 2210 of physical OPC UA devices 2100, 2200 in the SND 2000.

For each physical OPC UA subscriber 2110, the gateway device 3000 emulates EMUL DEV (S10) an industrial communication device 3100 as described above.

In the context of the one-way data transmission considered in this example, the relevant modules of the emulated device 3100 are:
- the virtual PND slave 3110 including functions to receive and transmit messages across the PND,
- the virtual OPC UA publisher module 3120 including functions to build and transmit publisher messages (OPC UA PubSub DataSetMessage),
- the first memory structure, as a part of the memory MEM of the gateway device 3000, used to store a description of a plurality of memory partitions, and
- the second memory structure, as a part of the memory MEM of the gateway device 3000, used to store the OPC UA information model 3122 dedicated to the emulated device 3100.

One or more primary messages 4000 are emitted by the PLC 1100 and transmitted to all PND slave devices 1200. Each said primary messages 4000 comprises the master address 1110 as a primary network domain (PND) source address and further comprises at least one primary network domain (PND) destination addresses which may be a physical slave address 1210 or a virtual slave address 3111, 3211. Each said primary message 4000 further comprises a primary data payload (application data).

The one or more primary messages 4000 are also received REC/PND (S20) by the gateway device 3000.

Any incoming PND messages received by the gateway device 3000 is dispatched to the intended PND virtual slave 3110 according to the destination address embedded in said incoming PND messages.

In other words, each said primary message 4000 which destination address is a virtual slave address 3111 is processed by the emulated device 3100 comprising the virtual PND slave 3110 associated to said virtual slave address 3111.

Processing includes decrypting DECRYP PRIM (S30) the primary data payload when applicable, that is if the primary data payload embedded in the primary message is encrypted.

Processing includes converting CONV PRIM/SEC (S40), or encoding, the primary data payload (or the decrypted primary data payload if it needed to be decrypted) into a format compatible with the OPC UA PubSub specification using the description of the set of memory partitions. The converted, or encoded, primary data payload is stored in the second memory structure used to store the OPC UA information model of the emulated device 3100.

In other words, the data stored in the second memory structure of the emulated device 3100 is updated to include the primary data payload upon its conversion, or encoding, according to the internal OPC UA information model 3122 dedicated to the emulated device 3100.

Any number of primary messages 4000, each comprising its own primary data payload and each having the same destination address 3111, may be successively or simultaneously received REC/PND (S20) within a predetermined time frame, then processed by a given virtual PND slave 3110 to update the data stored in the second memory structure of the emulated device 3100 to include each of the primary data payloads embedded in the primary messages.

Once one or more primary messages have been processed by the emulated device 3100, the virtual OPC UA publisher module 3120 reads the second memory structure to generate GEN PUB (S50) a publisher message 4100 comprising the virtual OPC UA publisher identifier 3127 and each stored primary data payload according to the internal OPC UA information model 3122.

In an example, each virtual publisher module 3120 is identified by a unique virtual publisher identifier 3127 (for example encoded over 16-bits). In other words, the virtual publisher identifier 3127 embedded in the publisher message 4100 allows, by itself, identifying the virtual publisher module 3120 which prepared the publisher message.

For example, the virtual publisher identifier 3127 may be set to an identifier of a corresponding physical device that is emulated by the emulated device 3100. For example if the emulated device is a CCIET slave, then the virtual publisher identifier 3127 may be identical to a CCIET identifier (16-bit LSB of IP address) of the CCIET slave.

According to rules specific to OPC UA PubSub communication models, the publisher message 4100 may further comprise a writer group identifier and a data set writer identifier, with the additional requirements that:
- all writer group identifiers shall be unique across all writer groups in the communication system, for a given publisher identifier 3127, and
- all data set writer identifiers shall be unique across all data set writers in the communication system, for a given publisher identifier 3127.

As in this example, only one writer group and only one data set writer are defined for each virtual publisher module 3120, the value of the writer group identifier and of the data set writer identifier may be set for example to 1, according to OPC UA PubSub rules. However, this choice supposes the addressing plan is coherent between the SND 2000 and the PND 1000.

In an example, the virtual publisher modules 3120, 3220 of each emulated devices 3100, 3200 are all identified by the same virtual publisher identifier 3127 which is associated to the gateway device 3000. In addition, the virtual publisher modules 3120, 3220 of each emulated devices 3100, 3200 may be associated to different writer group identifiers and different dataset writer identifiers. be set to the PND virtual slave address.

In other words, the virtual publisher identifier 3127 embedded in the publisher message 4100 does not allow, by itself, identifying the virtual publisher module 3120 which prepared the publisher message 4100 but rather only indicates that the publisher message 4100 was prepared by a publisher module of an emulated device. Yet, it is possible to identify the virtual publisher module 3120 which prepared the publisher message 4100, by also considering the writer group identifier and/or the dataset writer identifier embedded in the publisher message 4100.

In this example, independent address plans are allowed for the SND 2000 and the PND 1000. This embodiment allows letting more flexibility for the devices deployment in the two domains 1000, 2000.

Using the communication interface, the generated publisher message 4100 is transmitted TRANS PUB/SND (S60) through the secondary network domain (SND) to be read at least by the physical subscriber module 2110 of a physical OPC UA device 2100.

Therefore, by emulating each OPC-UA device 2100, 2200 in the SND 2000, by using an associated emulated device 3100, 3200, on a one-by-one basis, the gateway allows routing data transmission from the master device 1100 in the PND 1000 to the intended target physical OPC UA device 2100, 2200 in the SND 2000 in a transparent way for both the master device 1100 and for the intended target physical OPC UA device 2100, 2200.

Indeed, the primary message 4000 received by the gateway device 3000 is no different from that received by the physical PND slave devices 1200 in the PND 1000.

Moreover the generated publisher message 4100 may be interpreted by the subscriber modules 2110, 2210 of the physical OPC UA devices 2100, 2200 in the SND 2000 as would be any other publisher message that may be generated by the publisher modules 2120, 2220 of the physical OPC UA devices 2100, 2200 in the SND 2000.

It is now referred to Figure 5, which illustrates, in the context of a communication system such as illustrated for example in any of Figures 1 to 3, a one-way transmission of a data payload from physical OPC UA publisher modules 2210, 2220 of physical OPC UA devices 2100, 2200 in the SND 2000 to a master device 1100 in the PND.

For each physical OPC UA subscriber 2110, the gateway device 3000 emulates EMUL DEV (S10) an industrial communication device 3100 as described above.

In the context of the one-way data transmission considered in this example, the relevant modules of the emulated device 3100 are:
- the virtual PND slave 3110 including functions to receive and transmit messages across the PND,
- the virtual OPC UA subscriber module 3130 including functions to receive and interpret subscriber messages (OPC UA PubSub DataSetMessage),
- the first memory structure, as a part of the memory MEM of the gateway device 3000, used to store a description of a plurality of memory partitions, and
- the second memory structure, as a partition of the memory MEM of the gateway device 3000, used to store the OPC UA information model 3122 dedicated to the emulated device 3100.

One or more publisher messages are emitted by the publisher module 2120, 2220 of one or more physical OPC UA industrial communication devices 2100, 2200 in the SND 2000.

Each emitted publisher message comprises a OPC UA publisher identifier 2121, 2221 associated to the publisher module it was emitted from. Each emitted publisher message further comprises a secondary data payload (application data).

The emitted publisher messages may be received as secondary subscriber messages 5000, 5100 and interpreted by any subscriber module 2110, 2210 of the physical OPC UA industrial communication devices 2100, 2200.

These emitted messages are further received REC/SND (S21) as secondary subscriber messages 5000, 5100 by the gateway device 3000.

For each incoming secondary subscriber message 5000, 5100 received by the gateway device 3000, a reader group is identified by comparing:
- on one hand, the OPC UA publisher identifier 2121, 2221 associated to the publisher module 2100, 2200 the subscriber message 5000, 5100 was emitted from and, if relevant, the associated writer group and dataset writer identifier, and
- on the other hand, the reader group parameter set 3136.

Each incoming secondary subscriber message 5000, 5100 is dispatched to at least one intended virtual subscriber module 3130, 3230 based on the identified reader group.

Each secondary subscriber message 5000, 5100 dispatched to a virtual subscriber module 3130, 3230 is processed using the emulated device 3100, 3200 comprising said virtual subscriber module 3130, 3230 to store the secondary data payload in the second memory structure according to the internal OPC UA information model.

Processing includes decrypting DECRYP SUB (S31) the secondary data payload when applicable, that is if the secondary data payload embedded in the secondary subscriber message is encrypted.

Processing includes storing the secondary data payload (or the decrypted secondary data payload if it needed to be decrypted) into the second memory structure of the emulated device 3100.

In other words, the data stored in the second memory structure of the emulated device 3100 is updated to include the secondary data payload upon its reception according to the internal OPC UA information model.

Any number of secondary subscriber messages 5000, 5100, each comprising its own secondary data payload, may be successively or simultaneously received REC/SND (S21) within a predetermined time frame, then dispatched to and processed by one or more virtual subscriber modules 3130, 3230 to update the data stored in the second memory structure of the emulated device 3100 to include each of the secondary data payloads embedded in the secondary subscriber messages 5000, 5100.

Once one or more secondary subscriber messages 5000, 5100 have been processed by an emulated device 3100, the virtual PND slave 3110 of the emulated device 3100 reads the second memory structure to convert CONV SEC/PRIM (S41) the data included into the OPC UA information model into an encoded data payload, in a format interpretable by the master device 1100 in the PND 1000; to generate GEN MSG (S51) a virtual message 5200 comprising the virtual slave address 3111 of the virtual PND slave 3110 as a primary network domain (PND) source address, the master address 1110 of the master device 1100 as a primary network domain (PND) destination address and each stored secondary data payload.

Using the communication interface, the generated virtual message 5200 is transmitted TRANS MSG/PND (S61) through the PND 1000 to be read at least by the master device 1100.

The virtual message 5200 received by the master device 1100 is no different in its structure from messages 4010 emitted by physical PND slave devices 1200 in the PND 1000 and may be interpreted similarly by the master device 1100.

Moreover the virtual subscriber modules 3130, 3230 interpret received secondary subscriber messages 5000, 5100 in the same way as subscriber modules 2110, 2210 of the physical OPC UA devices 2100, 2200 in the SND 2000.

More generally, as introduced before, the gateway device 3000 acts in a transparent mode. Devices 1200 of the PND 1000 using a proprietary communication protocol shall communicate with OPC UA nodes 2100, 2200 of the secondary network domain 2000 as they were devices 1200 of the primary network domain 1000. For instance, two OPC UA subscribers 2110, 2210 will be considered by the master controller 1100 of the primary network domain 1000 like slave devices 1200.

When a physical OPC UA subscriber module 2110, 2210 (from the secondary network domain 2000) wants to receive data from a proprietary controller 1100, then the gateway device 3000 defines a virtual OPC UA publisher module 3120, 3220 that will push data to the subscriber module 2110, 2210. It will also define an associated virtual slave device 3110, 3210 that will handle data coming from the master device 1100 of the primary network domain 1000.

In the same way, when a physical OPC UA publisher module 2120, 2220 (from the secondary network domain 2000) wants to transmit data to a proprietary controller 1100, then the gateway defines a virtual OPC UA subscriber module 3130, 3230 that will receive data from the OPC UA publisher module 2120, 2220. It will also define an associated virtual slave device 3110, 3210 that will handle data coming from the master device 1100 of the primary network domain 1000.

The gateway device 3000 also defines some memory structures 3114, 3121, 3131 to store data received/transmitted to/from the proprietary controller, similarly to physical OPC UA publisher and subscriber modules. Indeed, the OPC UA specification provides an information model that can support any kind of data, and so, may be compatible with any kind of proprietary industrial Ethernet communication system. The data mapping is performed on a device basis (1-to-1), so there is no need to translate memory addresses manipulated by the application layer.

The gateway shall properly establish the data path for each created virtual devices by using the services defined in each network domain. For instance, a particular TSN data stream must be opened and setup for each virtual devices if TSN is used as the Link layer in one network domain.

The messages transmitted by the gateway shall respect the communication protocols for managed virtual devices.

Message transmission is triggered by the PND and the SND transmitters for example according to a network clock, which may be different in each domain.

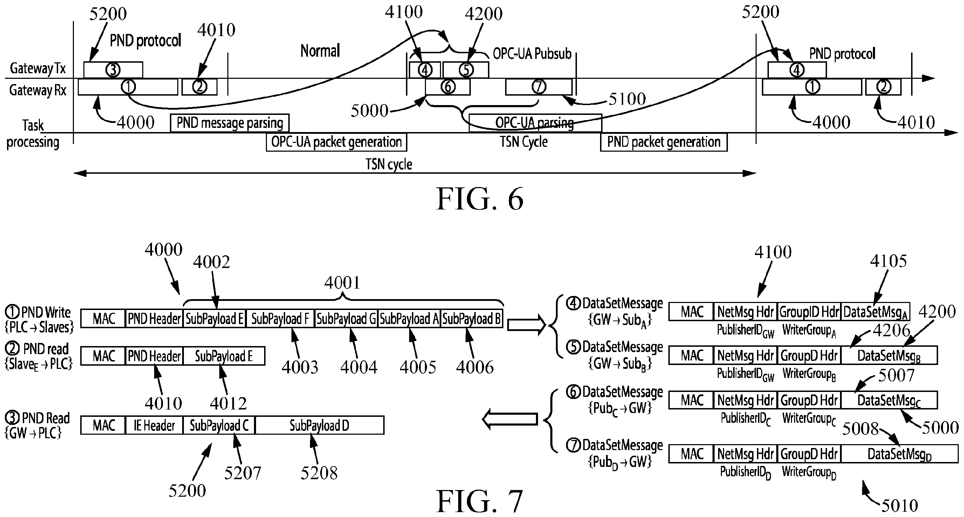

It is now referred to Figure 6, which illustrates an example of network traffic scheduling on the communication interface of the gateway device 3000 and to Figure 7, which illustrates example data payloads exchanged between entities in the communication system.

The communication interface comprises one network interface mixing both PND 1000 and SND 1000.

In this example, the network domains are synchronised and use a single cycle duration. At TSN level, some periods are dedicated to the PND protocol and OPC UA PubSub by defining adequate Open/Close gate for each traffic class. Specific Traffic Classes are dedicated to PND and SND frames.

The gateway device 3000 starts transmission of OPC UA Publisher messages at the beginning of a reserved OPC UA period in the cycle. It applies the same rule for virtual messages transmitted over the TSN#0 interface.

Figure 6 illustrates the relationship between the different frames exchanged in each industrial network domain.

The PND master device 1100 (PLC) sends one or more multicast primary messages 4000 which include a payload 4001 which may be decomposed in a subpayload 4002, 4003, 4004 for each PND slave 1200 and a subpayload 4005, 4006 for each virtual PND slave 3110, 3210 controlled by the PLC 1100.

In this example, there are 3 physical PND slaves E, F, G 1200 in the PND 1000, and 2 virtual slaves managed by the gateway device 3000 (A & B).

The gateway device 3000 extracts the subpayloads related to the virtual slaves A and B 3110, 3210, and stores the extracted subpayloads in the second memory structures of the associated OPC UA virtual publisher modules 3120, 3220 according to the associated OPC UA information model 3122, 3222. Such a processing terminates before the beginning of the next OPC UA reserved period.

Meanwhile, the PND slaves 1200 (such as slave E in the example) may send multicast frames 4010 comprising a subpayload 4012 back to the PLC 1100 (or to other PND slaves which may be physical 1200 or virtual 3110, 3210). Following the reception and processing of frames, the gateway device 3000 shall prepare OPC UA publisher messages 4100, 4200 to be emitted by the OPC UA virtual publisher modules 3120, 3220. Each publisher message 4100, 4200 comprises a subpayload 4105, 4206 intended to at least one target subscriber module 2110, 2210 having subscribed to the virtual publisher module 3120, 3220.

In the proposed PND/OPC UA device mapping, one publisher message 4100, 4200 is emitted for every OPC UA virtual publisher module 3110, 3120 because each physical slave device is linked to a unique writer group. Consequently, publisher messages 4100, 4200 can be immediately prepared (and optionally encrypted) just after the processing of the PND message 4000 carrying the subpayload of the associated PND slave 3110, 3120. Those tasks can be executed during the normal period inserted between the PND protocol and OPC UA period. Prepared publisher messages 4100, 4200 may be immediately enqueued into the MAC controller transmission queue dedicated to the traffic class used for OPC UA PubSub frames. They will be emitted by the MAC controller by applying for example a 802.1qbv scheduling model, meaning they will be sent at the beginning of the period dedicated to OPC UA PubSub.

During this period, the gateway device 3000 may receive secondary subscriber messages 5000, 5100 emitted by physical OPC UA publisher modules 2120, 2220, for which OPC UA virtual subscriber modules 3130, 3230 have subscribed. The secondary subscriber messages 5000, 5100 each comprise a subpayload 5007, 5008 whose secondary data payload is intended to be transmitted to the master device 1100.

The secondary subscriber messages 5000, 5100 are processed immediately by the gateway device 3000 and the corresponding datasets are updated with the carried data. Because of 1:1 mapping between OPC UA virtual subscriber modules and PND virtual slaves, it is possible to prepare the subpayload part 5207, 5208 associated to the PND virtual slave 3110, 3210. This subpayload part is inserted in a single virtual message 5200 emitted by the gateway device 3000 during the next cyclic PND period.

Emission of OPC UA virtual publisher messages 4100, 4200 (DataSetMessage) may be triggered by timers controlled by the network clock (e.g. PTP Hardware Clock).

In a first example, a single timer can be defined as a fixed offset from the cycle start and upon expiration, the gateway generates the whole set of publisher messages 4100, 4200 for each managed pair of publisher identifier and writer group identifier.

In a second example, when PND 1000 and SND 2000 are synchronised, the processing of messages received from the PND 1000 triggers the building of OPC UA publisher messages as soon as the related data in the information model has been updated. First, this method allows a faster message generation since the generation of message is spread over the whole cycle. Second, it is not strictly required to define a timer triggered by the network clock since OPC UA messages are prepared immediately after the reception of the last message 4000 coming from the PND 1000 conveying data that are included into the corresponding publisher message 4100, 4200.

In the same way, emission of generated virtual messages 5200 through the primary network domain 1000 (PND) to the master device 1100 may be triggered by timers controlled by the network clock. In a first example, a single timer can be defined as a fixed offset from the cycle start and upon expiration, the gateway 3000 generates the whole set of virtual messages 5200, at each managed virtual slave module 3110, 3210. In a second example, when PND 1000 and SND 2000 are synchronized, the processing of messages received from the SND 2000 triggers the building of virtual messages 5200 by each virtual slave module 3110 as soon as the related data in the information model 3122 of the emulated device 3100 comprising said virtual slave module 3110 has been updated.

## Claims

1. A method for interconnecting a primary network domain (PND) with a secondary network domain (SND) through a gateway device (GW), wherein:
- the primary network domain (PND) is implemented in an industrial communication system comprising a master device associated to a master address,
- the secondary network domain (SND) is implemented in a communication system using a OPC UA PubSub communication protocol and comprising a physical OPC UA device comprising a physical subscriber module,
- the gateway device is equipped with a processing unit (CPU) operably connected to a memory (MEM) and to a communication interface (CI) with the primary network domain (PND) and with the secondary network domain (SND), and
- the method comprises:
∘ emulating an industrial communication device using the gateway device, the emulated device comprising:
▪ a virtual slave module associated to a virtual slave address in the primary network domain (PND), the virtual slave module comprising a first memory structure located into the memory (MEM), and
▪ a virtual OPC UA publisher module associated to a virtual OPC UA publisher identifier in the secondary network domain (SND) and to an internal OPC UA information model stored into a second memory structure located in the memory (MEM),
∘ using the virtual slave module, receive from the primary network domain (PND) at least one primary message comprising the master address as a primary network domain (PND) source address, the virtual slave address as a primary network domain (PND) destination address and a primary data payload,
∘ for each received primary message, using the emulated device, process said received primary message to store the primary data payload in the second memory structure according to the internal OPC UA information model,
∘ using the virtual OPC UA publisher module, generate a publisher message comprising the virtual OPC UA publisher identifier and each stored primary data payload according to the internal OPC UA information model, and
∘ using the communication interface, transmit the generated publisher message through the secondary network domain (SND) to the physical subscriber module.

2. The method according to claim 1, wherein:
- the first memory structure comprises a description of a plurality of memory partitions,
- each memory partition being mapped to a corresponding remote resource in the primary network domain (PND),
- each memory partition being further mapped to a corresponding reference into the internal OPC UA information model stored in the second memory structure, and
- processing said received primary message comprises decoding the primary data payload, using the set of memory partitions, to store the primary data payload in the second memory structure according to the internal OPC UA information model.

3. The method according to any of the preceding claims, wherein, the physical subscriber module being configured to identify a source of a received publisher message incorporating a publisher identifier based on the incorporated publisher identifier,
- the virtual OPC UA publisher identifier associated to the virtual OPC UA publisher module in the secondary network domain (SND) is specific to the virtual OPC UA publisher module.

4. The method according to claim 1 or 2, wherein, the physical subscriber module being configured to identify a source of a received publisher message incorporating a publisher identifier and a writer identifier based on the incorporated publisher identifier and on the incorporated writer identifier,
- the virtual OPC UA publisher identifier associated to the virtual OPC UA publisher module in the secondary network domain (SND) is specific to the gateway device, and
- the generated publisher message further comprises a writer identifier specific to the virtual OPC UA publisher module.

5. The method according to any of the preceding claims, wherein:
- the communication interface is configured to allow communication according to a schedule comprising a plurality of first time windows, reserved for communication through the primary network domain (PND), a plurality of second time windows, reserved for communication through the secondary network domain (SND), each first time window being separated from the previous and from the next second time window by a non-reserved time window,
- each primary message is received using the virtual slave module from the primary network domain (PND) during a first reserved time window,
- each received primary message is processed before the beginning of the next second reserved time window,
- processing each said received primary message triggers generating the publisher message before the beginning of said next second reserved time window, and
- the generated publisher message is transmitted through the secondary network domain (SND) during said next second reserved time window.

6. The method according to any of claims 1 to 4, wherein the communication interface is configured to allow communication according to a schedule comprising a plurality of first time windows, reserved for communication through the primary network domain (PND), a plurality of second time windows, reserved for communication through the secondary network domain (SND), each first time window being separated from the previous and from the next second time window by a non-reserved time window,
- each primary message is received using the virtual slave module during a first reserved time window,
- each received primary message is processed before the beginning of the next second reserved time window,
- generating the publisher message is triggered during said next second reserved time window, and
- the generated publisher message is transmitted through the secondary network domain (SND) during said next second reserved time window.

7. A method for interconnecting a primary network domain (PND) with a secondary network domain (SND) through a gateway device (GW), wherein:
- the primary network domain (PND) is implemented in an industrial communication system comprising a master device associated to a master address,
- the secondary network domain (SND) is implemented in a communication system using a OPC UA PubSub communication protocol and comprising a physical OPC UA device comprising a physical publisher module associated to a OPC UA publisher identifier,
- the gateway device is equipped with a processing unit (CPU) operably connected to a memory (MEM) and to a communication interface (CI) with the primary network domain (PND) and with the secondary network domain (SND), and
- the method comprises:
∘ emulating an industrial communication device using the gateway device, the emulated device comprising:
▪ a virtual slave module associated to a virtual slave address in the primary network domain (PND), the virtual slave module comprising a first memory structure located into the memory (MEM), and
▪ a virtual OPC UA subscriber module associated to an internal OPC UA information model stored into a second memory structure located in the memory (MEM),
∘ using the virtual OPC UA subscriber module, receiving at least one secondary subscriber message comprising the OPC UA publisher identifier and a secondary data payload,
∘ for each received secondary subscriber message, using the emulated device, processing said received secondary subscriber message to store the secondary data payload in the second memory structure according to the internal OPC UA information model,
∘ generating, using the virtual slave module, a virtual message comprising the virtual slave address as a primary network domain (PND) source address, the master address as a primary network domain (PND) destination address and an encoded data payload, derived from each secondary data payload stored in the second memory structure, and
∘ using the communication interface, transmit the generated virtual message through the primary network domain (PND) to the master device.

8. The method according to claim 7, wherein processing said received secondary subscriber message comprises decrypting said received secondary subscriber message using an encryption key selected based on the OPC UA publisher identifier.

9. The method according to claim 7 or 8, wherein:
- the physical publisher module is further associated to a dataset writer identifier specific to the physical OPC UA device, and
- processing said received secondary subscriber message comprises:
∘ decoding the secondary data payload, using the virtual OPC UA subscriber module, based on the dataset writer identifier associated to the physical OPC UA device, and
∘ storing the decoded secondary data payload in the second memory structure according to the internal OPC UA information model.

10. The method according to any of claims 7 to 9, wherein:
- the first memory structure comprises a description of a plurality of memory partitions,
- each memory partition being mapped to a corresponding remote resource in the primary network domain (PND),
- each memory partition being further mapped to a corresponding reference into the internal OPC UA information model stored in the second memory structure, and
- generating the virtual message comprises encoding the stored secondary data payload, using the description of the plurality of memory partitions, into a format readable by the master device.

11. The method according to any of claims 7 to 10, wherein:
- the communication interface is configured to allow communication according to a schedule comprising a plurality of first time windows, reserved for communication through the primary network domain (PND), a plurality of second time windows, reserved for communication through the secondary network domain (SND), each first time window being separated from the previous and from the next second time window by a non-reserved time window,
- each secondary subscriber message is received using the virtual OPC UA subscriber module during a second reserved time window,
- each received secondary subscriber message is processed before the beginning of the next first reserved time window,
- processing each received secondary subscriber message triggers generating the virtual message before the beginning of said next first reserved time window, and
- the generated virtual message is transmitted through the primary network domain (SND) during said next first reserved time window.

12. The method according to any of claims 7 to 10, wherein the communication interface is configured to allow communication according to a schedule comprising a plurality of first time windows, reserved for communication through the primary network domain (PND), a plurality of second time windows, reserved for communication through the secondary network domain (SND), each first time window being separated from the previous and from the next second time window by a non-reserved time window,
- each secondary subscriber message is received using the virtual OPC UA subscriber module during a second reserved time window,
- each received secondary subscriber message is processed before the beginning of the next first reserved time window,
- generating the virtual message is triggered during said next first reserved time window, and
- the generated virtual message is transmitted through the primary network domain (SND) during said next first reserved time window.

13. A computer program comprising one or more stored sequence/s of instructions that is accessible to a processor and which, when executed by the processor, causes the processor to carry out the steps of the method according to any of claims 1 to 12.

14. A computer-readable storage medium storing one or more stored sequence/s of instructions of the computer program of claim 13.

15. A gateway device equipped with a processing unit (CPU) operably connected to a memory (MEM) and to a communication interface (CI) with a primary network domain (PND) and with a secondary network domain (SND), wherein:
- the primary network domain (PND) is implemented in an industrial communication system comprising a master device associated to a master address, and
- the secondary network domain (SND)is implemented in a communication system using a OPC UA PubSub communication protocol and comprising a physical OPC UA device comprising a physical subscriber module,
- the gateway device being configured to:
∘ emulate an industrial communication device using the gateway device, the emulated device comprising:
▪ a virtual slave module associated to a virtual slave address in the primary network domain (PND), the virtual slave module comprising a first memory structure being located in the memory (MEM), and
▪ a virtual OPC UA publisher module associated to a virtual OPC UA publisher identifier in the secondary network domain (SND) and to an internal OPC UA information model stored in a second memory structure located in the memory (MEM),
∘ using the virtual slave module, receive from the primary network domain (PND) at least one primary message comprising the master address as a primary network domain (PND) source address, the virtual slave address as a primary network domain (PND) destination address and a primary data payload,
∘ for each received primary message, using the emulated device, process said received primary message to store the primary data payload in the second memory structure according to the internal OPC UA information model,
∘ using the virtual OPC UA publisher module, generate a publisher message comprising the virtual OPC UA publisher identifier and each stored primary data payload according to the internal OPC UA information model, and
∘ using the communication interface, transmit the generated publisher message through the secondary network domain (SND) to the physical subscriber module.

## Patentansprüche

1. Verfahren zum Verbinden einer primären Netzwerkdomäne (PND) mit einer sekundären Netzwerkdomäne (SND) durch eine Gateway-Vorrichtung (GW), wobei:
- die primäre Netzwerkdomäne (PND) in einem industriellen Kommunikationssystem implementiert ist, welches eine Master-Vorrichtung umfasst, welche einer Master-Adresse zugeordnet ist,
- die sekundäre Netzwerkdomäne (SND) in einem Kommunikationssystem unter Verwendung eines OPC UA PubSub Kommunikationsprotokolls implementiert ist und eine physische OPC UA-Vorrichtung umfasst, welche ein physisches Subscriber-Modul umfasst,
- die Gateway-Vorrichtung mit einer Verarbeitungseinheit (CPU) ausgerüstet ist, welche betriebsmäßig mit einem Speicher (MEM) und einer Kommunikationsschnittstelle (CI) mit der primären Netzwerkdomäne (PND) und der sekundären Netzwerkdomäne (SND) verbunden ist, und
- das Verfahren umfasst:
o Emulieren einer industriellen Kommunikationsvorrichtung unter Verwendung der Gateway-Vorrichtung, wobei die emulierte Vorrichtung umfasst:
▪ ein virtuelles Slave-Modul, welches einer virtuellen Slave-Adresse in der primären Netzwerkdomäne (PND) zugeordnet ist, wobei das virtuelle Slave-Modul eine erste Speicherstruktur umfasst, welche in dem Speicher (MEM) platziert ist, und
▪ ein virtuelles OPC UA Publisher-Modul, welches einer virtuellen OPC UA Publisher-Kennung in der sekundären Netzwerkdomäne (SND) und einem internen OPC UA Informationsmodell zugeordnet ist, welches in einer zweiten Speicherstruktur gespeichert ist, welche in dem Speicher (MEM) platziert ist,
∘ unter Verwendung des virtuellen Slave-Moduls, Erhalten von der primären Netzwerkdomäne (PND) wenigstens einer primären Nachricht, welche die Master-Adresse als eine primäre Netzwerkdomäne (PND)-Quellenadresse, die virtuelle Slave-Adresse als eine primäre Netzwerkdomäne (PND)-Zieladresse und eine primäre Daten-Nutzlast umfasst,
∘ für jede erhaltene primäre Nachricht, unter Verwendung der emulierten Vorrichtung, Verarbeiten der erhaltenen primären Nachricht, um die primäre Daten-Nutzlast in der zweiten Speicherstruktur gemäß dem internen OPC UA Informationsmodell zu speichern,
o unter Verwendung des virtuellen OPC UA Publisher-Moduls, Erzeugen einer Publisher-Nachricht, welche die virtuelle OPC UA Publisher-Kennung und jede gespeicherte primäre Daten-Nutzlast gemäß dem internen OPC UA Informationsmodell umfasst, und
o unter Verwendung der Kommunikationsschnittstelle, Übertragen der erzeugten Publisher-Nachricht durch die sekundäre Netzwerkdomäne (SND) zu dem physischen Subscriber-Modul.

2. Verfahren nach Anspruch 1, wobei:
- die erste Speicherstruktur eine Beschreibung einer Mehrzahl von Speicherpartitionen umfasst,
- jede Speicherpartition einer entsprechenden entfernten Ressource in der primären Netzwerkdomäne (PND) zugewiesen ist,
- jede Speicherpartition ferner einer entsprechenden Referenz in dem internen OPC UA Informationsmodell zugewiesen ist, welches in der zweiten Speicherstruktur gespeichert ist, und
- das Verarbeiten der erhaltenen primären Nachsicht ein Dekodieren der primären Daten-Nutzlast unter Verwendung des Satzes von Speicherpartitionen umfasst, um die primäre Daten-Nutzlast in der zweiten Speicherstruktur gemäß dem internen OPC UA Informationsmodell zu speichern.

3. Verfahren nach einem der vorhergehenden Ansprüche, wobei das physische Subscriber-Modul dazu eingerichtet ist, eine Quelle einer erhaltenen Publisher-Nachricht zu identifizieren, welche eine Publisher-Kennung auf Grundlage der eingeschlossenen Publisher-Kennung einschließt,
- wobei die virtuelle OPC UA Publisher-Kennung, welche dem virtuellen OPC UA Publisher-Modul in der sekundären Netzwerkdomäne (SND) zugeordnet ist, spezifisch für das virtuelle OPC UA Publisher-Modul ist.

4. Verfahren nach Anspruch 1 oder 2, wobei das physische Subscriber-Modul dazu eingerichtet ist, eine Quelle eine erhaltenen Publisher-Nachricht zu identifizieren, welche eine Publisher-Kennung und eine Writer-Kennung auf Grundlage der eingeschlossenen Publisher-Kennung und der eingeschlossenen Writer-Kennung einschließt,
- wobei die virtuelle OPC UA Publisher-Kennung, welche dem virtuellen OPC UA Publisher-Modul in der sekundären Netzwerkdomäne (SND) zugeordnet ist, spezifisch für die Gateway-Vorrichtung ist, und
- die erzeugte Publisher-Nachricht ferner eine Writer-Kennung umfasst, welche spezifisch für das virtuelle OPC UA Publisher-Modul ist.

5. Verfahren nach einem der vorhergehenden Ansprüche, wobei:
- die Kommunikationsschnittstelle dazu eingerichtet ist, eine Kommunikation gemäß einem Zeitplan zu erlauben, welcher eine Mehrzahl von ersten Zeitfenstern, welche für eine Kommunikation durch die primäre Netzwerkdomäne (PND) reserviert sind, eine Mehrzahl von zweiten Zeitfenstern, welche für eine Kommunikation durch die sekundäre Netzwerkdomäne (SND) reserviert sind, umfasst, wobei jedes erste Zeitfenster von dem vorhergehenden und von dem nächsten zweiten Zeitfenster durch ein nicht-reserviertes Zeitfenster getrennt ist,
- jede primäre Nachricht unter Verwendung des virtuellen Slave-Moduls von der primären Netzwerkdomäne (PND) während eines ersten reservierten Zeitfensters erhalten wird,
- jede erhaltene primäre Nachricht vor dem Beginn des nächsten zweiten reservierten Zeitfensters verarbeitet wird,
- das Verarbeiten jeder erhaltenen primären Nachricht ein Erzeugen der Publisher-Nachricht vor dem Beginn des nächsten zweiten reservierten Zeitfensters auslöst, und
- die erzeugte Publisher-Nachricht durch die sekundäre Netzwerkdomäne (SND) während des nächsten zweiten reservierten Zeitfensters übertragen wird.

6. Verfahren nach einem der Ansprüche 1 bis 4, wobei die Kommunikationsschnittstelle dazu eingerichtet ist, eine Kommunikation gemäß einem Zeitplan zu erlauben, welcher eine Mehrzahl von ersten Zeitfenstern, welche für eine Kommunikation durch die primäre Netzwerkdomäne (PND) reserviert sind, eine Mehrzahl von zweiten Zeitfenstern, welche für eine Kommunikation durch die sekundäre Netzwerkdomäne (SND) reserviert sind, umfasst, wobei jedes erste Zeitfenster von dem vorhergehenden und von dem nächsten zweiten Zeitfenster durch ein nicht-reserviertes Zeitfenster getrennt ist,
- jede primäre Nachricht unter Verwendung des virtuellen Slave-Moduls während eines ersten reservierten Zeitfensters erhalten wird,
- jede erhaltene primäre Nachricht vor dem Beginn des nächsten zweiten reservierten Zeitfensters verarbeitet wird,
- ein Erzeugen der Publisher-Nachricht während des nächsten zweiten reservierten Zeitfensters ausgelöst wird, und
- die erzeugte Publisher-Nachricht durch die sekundäre Netzwerkdomäne (SND) während des nächsten zweiten reservierten Zeitfensters übertragen wird.

7. Verfahren zum Verbinden einer primären Netzwerkdomäne (PND) mit einer sekundären Netzwerkdomäne (SND) durch eine Gateway-Vorrichtung (GW), wobei:
- die primäre Netzwerkdomäne (PND) in einem industriellen Kommunikationssystem implementiert ist, welches eine Master-Vorrichtung umfasst, welche einer Master-Adresse zugeordnet ist,
- die sekundäre Netzwerkdomäne (SND) in einem Kommunikationssystem unter Verwendung eines OPC US PubSub Kommunikationsprotokolls implementiert ist und eine physische OPC UA-Vorrichtung umfasst, welche ein physisches Publisher-Modul umfasst, welches einer OPC UA Publisher-Kennung zugeordnet ist,
- die Gateway-Vorrichtung mit einer Verarbeitungseinheit (CPU) ausgerüstet ist, welche betriebsmäßig mit einem Speicher (MEM) und einer Kommunikationsschnittstelle (CI) mit der primären Netzwerkdomäne (PND) und der sekundären Netzwerkdomäne (SND) verbunden ist, und
- das Verfahren umfasst:
o Emulieren einer industriellen Kommunikationsvorrichtung unter Verwendung der Gateway-Vorrichtung, wobei die emulierte Vorrichtung umfasst:
▪ ein virtuelles Slave-Modul, welches einer virtuellen Slave-Adresse in der primären Netzwerkdomäne (PND) zugeordnet ist, wobei das virtuelle Slave-Modul eine erste Speicherstruktur umfasst, welche in dem Speicher (MEM) platziert ist, und
▪ ein virtuelles OPC UA Subscriber-Modul, welches einem virtuellen OPC UA Informationsmodell zugeordnet ist, welches in einer zweiten Speicherstruktur gespeichert ist, welche in dem Speicher (MEM) platziert ist,
o unter Verwendung des virtuellen OPC UA Subscriber-Moduls, Erhalten von wenigstens einer sekundären Subscriber-Nachricht, welche die OPC UA Publisher-Kennung und eine sekundäre Daten-Nutzlast umfasst,
o für jede erhaltene sekundäre Subscriber-Nachricht, unter Verwendung der emulierten Vorrichtung, Verarbeiten der erhaltenen sekundären Subscriber-Nachricht, um die sekundäre Daten-Nutzlast in der zweiten Speicherstruktur gemäß dem internen OPC UA Informationsmodell zu speichern,
o Erzeugen, unter Verwendung des virtuellen Slave-Moduls, einer virtuellen Nachricht, welche die virtuelle Slave-Adresse als eine primäre Netzwerkdomäne (PND)-Quellenadresse, die Master-Adresse als eine primäre Netzwerkdomäne (PND)-Zieladresse und eine kodierte Daten-Nutzlast umfasst, welche von jeder sekundären Daten-Nutzlast abgeleitet ist, welche in der zweiten Speicherstruktur gespeichert ist, und
o unter Verwendung der Kommunikationsschnittstelle, Übertragen der virtuellen Nachricht durch die primäre Netzwerkdomäne (SND) zu der Master-Vorrichtung.

8. Verfahren nach Anspruch 7, wobei das Verarbeiten der erhaltenen sekundären Subscriber-Nachricht ein Entschlüsseln der sekundären Subscriber-Nachricht unter Verwendung eines Verschlüsselungsschlüssels umfasst, welcher auf Grundlage der OPC UA Publisher-Kennung ausgewählt wird.

9. Verfahren nach Anspruch 7 oder 8, wobei:
- das physische Publisher-Modul ferner einer Datensatz-Writer-Kennung zugeordnet ist, welche spezifisch für die physische OPC UA Vorrichtung ist, und
- das Verarbeiten der erhaltenen sekundären Subscriber-Nachricht umfasst:
o Entschlüsseln der sekundären Daten-Nutzlast unter Verwendung des virtuellen OPC US Subscriber-Moduls auf Grundlage der Datensatz-Writer-Kennung, welche der physischen OPC UA-Vorrichtung zugeordnet ist, und
o Speichern der entschlüsselten sekundären Daten-Nutzlast in der zweiten Speicherstruktur gemäß dem internen OPC UA Informationsmodell.

10. Verfahren nach einem der Ansprüche 7 bis 9, wobei:
- die erste Speicherstruktur eine Beschreibung einer Mehrzahl von Speicherpartitionen umfasst,
- jede Speicherpartition einer entsprechenden entfernten Ressource in der primären Netzwerkdomäne (PND) zugewiesen ist,
- jede Speicherpartition ferner einer entsprechenden Referenz in dem internen OPC UA Informationsmodell zugewiesen ist, welches in der zweiten Speicherstruktur gespeichert ist, und
- das Erzeugen der virtuellen Nachricht ein Kodieren der gespeicherten sekundären Daten-Nutzlast unter Verwendung der Beschreibung der Mehrzahl von Speicherpartitionen in ein Format umfasst, welches von der Master-Vorrichtung lesbar ist.

11. Verfahren nach einem der Ansprüche 7 bis 10, wobei:
- die Kommunikationsschnittstelle dazu eingerichtet ist, eine Kommunikation gemäß einem Zeitplan zu erlauben, welcher eine Mehrzahl von ersten Zeitfenstern, welche für eine Kommunikation durch die primäre Netzwerkdomäne (PND) reserviert sind, eine Mehrzahl von zweiten Zeitfenstern, welche für eine Kommunikation durch die sekundäre Netzwerkdomäne (SND) reserviert sind, umfasst, wobei jedes erste Zeitfenster von dem vorhergehenden und von dem nächsten zweiten Zeitfenster durch ein nicht-reserviertes Zeitfenster getrennt ist,
- jede sekundäre Subscriber-Nachricht unter Verwendung des virtuellen OPC UA Subscriber-Moduls während eines zweiten reservierten Zeitfensters erhalten wird,
- jede erhaltene sekundäre Subscriber-Nachricht vor dem Beginn des nächsten ersten reservierten Zeitfensters verarbeitet wird,
- das Verarbeiten von jeder erhaltenen sekundären Subscriber-Nachricht ein Erzeugen der virtuellen Nachricht vor dem Beginn des nächsten ersten reservierten Zeitfensters auslöst, und
- die erzeugte virtuelle Nachricht durch die primäre Netzwerkdomäne (SND) während des nächsten ersten reservierten Zeitfensters übertragen wird.

12. Verfahren nach einem der Ansprüche 7 bis 10, wobei die Kommunikationsschnittstelle dazu eingerichtet ist, eine Kommunikation gemäß einem Zeitplan zu erlauben, welcher eine Mehrzahl von ersten Zeitfenstern, welche für eine Kommunikation durch die primäre Netzwerkdomäne (PND) reserviert sind, eine Mehrzahl von zweiten Zeitfenstern, welche für eine Kommunikation durch die sekundäre Netzwerkdomäne (SND) reserviert sind, umfasst, wobei jedes erste Zeitfenster von dem vorhergehenden und von dem nächsten zweiten Zeitfenster durch ein nicht-reserviertes Zeitfenster getrennt ist,
- wobei jede sekundäre Subscriber-Nachricht unter Verwendung des virtuellen OPC UA Subscriber-Moduls während eines zweiten reservierten Zeitfensters erhalten wird,
- jede erhaltene sekundäre Subscriber-Nachricht vor dem Beginn des nächsten ersten reservierten Zeitfensters verarbeitet wird,
- das Erzeugen der virtuellen Nachricht während des nächsten ersten reservierten Zeitfensters ausgelöst wird, und
- die erzeugte virtuelle Nachricht durch die primäre Netzwerkdomäne (SND) während des nächstens ersten reservierten Zeitfensters übertragen wird.

13. Computerprogramm, umfassend eine oder mehrere gespeicherte Sequenz/en von Anweisungen, welche für einen Prozessor zugänglich ist, und welche, wenn sie von dem Prozessor ausgeführt wird, den Prozessor dazu veranlasst, die Schritte des Verfahrens nach einem der Ansprüche 1 bis 12 auszuführen.

14. Computerlesbares Speichermedium, welches eine oder mehrere gespeicherte Sequenz/en von Anweisungen des Computerprogramms nach Anspruch 13 speichert.

15. Gateway-Vorrichtung, welche mit einer Verarbeitungseinheit (CPU) ausgerüstet ist, welche betriebsmäßig mit einem Speicher (MEM) und mit einer Kommunikationsschnittstelle (CI) mit einer primären Netzwerkdomäne (PND) und mit einer sekundären Netzwerkdomäne (SND) verbunden ist, wobei:
- die primäre Netzwerkdomäne (PND) in einem industriellen Kommunikationssystem implementiert ist, welches eine Mastervorrichtung umfasst, welche einer Master-Adresse zugeordnet ist, und
- die sekundäre Netzwerkdomäne (SND) in einem Kommunikationssystem unter Verwendung eines OPC UA PubSub Kommunikationsprotokolls implementiert ist und eine physische OPC UA Vorrichtung umfasst, welche ein physisches Subscriber-Modul umfasst,
- wobei die Gateway-Vorrichtung dazu eingerichtet ist:
o eine industrielle Kommunikationsvorrichtung unter Verwendung der Gateway-Vorrichtung zu emulieren, wobei die emulierte Vorrichtung umfasst:
▪ ein virtuelles Slave-Modul, welches einer virtuellen Slave-Adresse in der primären Netzwerkdomäne (PND) zugeordnet ist, wobei das virtuelle Slave-Modul eine erste Speicherstruktur umfasst, welche in dem Speicher (MEM) platziert ist, und
▪ ein virtuelles OPC UA Publisher-Modul, welches einer virtuellen OPC UA Publisher-Kennung in der sekundären Netzwerkdomäne (SND) und einem internen OPC UA Informationsmodell zugeordnet ist, welches in einer zweiten Speicherstruktur gespeichert ist, welche in dem Speicher (MEM) platziert ist,
o unter Verwendung des virtuellen Slave-Moduls von der primären Netzwerkdomäne (PND) wenigstens eine primären Nachricht zu erhalten, welche die Master-Adresse als eine primäre Netzwerkdomäne (PND)-Quellenadresse, die virtuelle Slave-Adresse als eine primäre Netzwerkdomäne (PND)-Zieladresse und eine primäre Daten-Nutzlast umfasst,
o für jede erhaltene primäre Nachricht, unter Verwendung der emulierten Vorrichtung, die erhaltene primäre Nachricht zu verarbeiten, um die primäre Daten-Nutzlast in der zweiten Speicherstruktur gemäß dem internen OPC UA Informationsmodell zu speichern,
o unter Verwendung des virtuellen OPC UA Publisher-Moduls, eine Publisher-Nachricht zu erzeugen, welche die virtuelle OPC UA Publisher-Kennung und jede gespeicherte primäre Daten-Nutzlast gemäß dem internen OPC UA Informationsmodell umfasst, und
o unter Verwendung der Kommunikationsschnittstelle die erzeugte Publisher-Nachricht durch die sekundäre Netzwerkdomäne (SND) zu dem physischen Subscriber-Modul zu übertragen.

## Revendications

1. Procédé pour interconnecter un domaine de réseau primaire (PND) et un domaine de réseau secondaire (SND) par le biais d'un dispositif passerelle (GW), dans lequel :
- le domaine de réseau primaire (PND) est mis en oeuvre dans un système de communication industrielle comprenant un dispositif maître associé à une adresse maîtresse,
- le domaine de réseau secondaire (SND) est mis en oeuvre dans un système de communication en utilisant un protocole de communication OPC UA PubSub et comprenant un dispositif OPC UA physique comprenant un module abonné physique,
- le dispositif passerelle est équipé d'une unité de traitement (CPU) connectée fonctionnellement à une mémoire (MEM) et à une interface de communication (CI) avec le domaine de réseau primaire (PND) et avec le domaine de réseau secondaire (SND), et
- le procédé comprend :
∘ l'émulation d'un dispositif de communication industrielle en utilisant le dispositif passerelle, le dispositif émulé comprenant :
a un module esclave virtuel associé à une adresse d'esclave virtuel dans le domaine de réseau primaire (PND), le module esclave virtuel comprenant une première structure de mémoire située dans la mémoire (MEM), et
▪ un module diffuseur OPC UA virtuel associé à un identifiant de diffuseur OPC UA virtuel dans le domaine de réseau secondaire (SND) et à un modèle d'informations OPC UA interne stocké dans une seconde structure de mémoire située dans la mémoire (MEM),
∘ en utilisant le module esclave virtuel, recevoir à partir du domaine de réseau primaire (PND) au moins un message primaire comprenant l'adresse maîtresse en tant qu'adresse de source de domaine de réseau primaire (PND), l'adresse d'esclave virtuel en tant qu'adresse de destination de domaine de réseau primaire (PND) et une charge utile de données primaire,
∘ pour chaque message primaire reçu, en utilisant le message émulé, traiter ledit message primaire reçu pour stocker la charge utile de données primaire dans la seconde structure de mémoire conformément au modèle d'informations OPC UA interne,
∘ en utilisant le module diffuseur OPC UA virtuel, générer un message de diffuseur comprenant l'identifiant de diffuseur OPC UA virtuel et chaque charge utile de données primaire stockée conformément au modèle d'informations OPC UA interne, et
∘ en utilisant l'interface de communication, transmettre le message de diffuseur généré par le biais du domaine de réseau secondaire (SND) au module abonné physique.

2. Procédé selon la revendication 1, dans lequel :
- la première structure de mémoire comprend une description d'une pluralité de partitions de mémoire,
- chaque partition de mémoire étant mappée sur une ressource distante correspondante dans le domaine de réseau primaire (PND),
- chaque partition de mémoire étant en outre mappée sur une référence correspondante dans le modèle d'informations OPC UA interne stocké dans la seconde structure de mémoire, et
- le traitement dudit message primaire reçu comprend le décodage de la charge utile de données primaire, en utilisant l'ensemble de partitions de mémoire, pour stocker la charge utile de données primaire dans la seconde structure de mémoire conformément au modèle d'informations OPC UA interne.

3. Procédé selon l'une quelconque des revendications précédentes, dans lequel, le module abonné physique étant configuré pour identifier une source d'un message de diffuseur reçu incorporant un identifiant de diffuseur sur la base de l'identifiant de diffuseur incorporé,
- l'identifiant de diffuseur OPC UA virtuel associé au module diffuseur OPC UA virtuel dans le domaine de réseau secondaire (SND) est spécifique au module diffuseur OPC UA virtuel.

4. Procédé selon la revendication 1 ou 2, dans lequel, le module abonné physique étant configuré pour identifier une source d'un message de diffuseur reçu incorporant un identifiant de diffuseur et un identifiant de scripteur sur la base de l'identifiant de diffuseur incorporé et de l'identifiant de scripteur incorporé,
- l'identifiant de diffuseur OPC UA virtuel associé au module diffuseur OPC UA virtuel dans le domaine de réseau secondaire (SND) est spécifique au dispositif passerelle, et
- le message de diffuseur généré comprend en outre un identifiant de scripteur spécifique au module diffuseur OPC UA virtuel.

5. Procédé selon l'une quelconque des revendications précédentes, dans lequel :
- l'interface de communication est configurée pour permettre une communication conformément à un schéma comprenant une pluralité de premières fenêtres de temps, réservées à une communication par le biais du domaine de réseau primaire (PND), une pluralité de secondes fenêtres de temps, réservées à une communication par le biais du domaine de réseau secondaire (SND), chaque première fenêtre de temps étant séparée de la précédente et de la seconde fenêtre de temps suivante par une fenêtre de temps non réservée,
- chaque message primaire est reçu en utilisant le module esclave virtuel à partir du domaine de réseau primaire (PND) durant une première fenêtre de temps réservée,
- chaque message primaire reçu est traité avant le début de la seconde fenêtre de temps réservée suivante,
- le traitement de chaque message primaire reçu déclenche la génération du message de diffuseur avant le début de ladite seconde fenêtre de temps réservée suivante, et
- le message de diffuseur généré est transmis par le biais du domaine de réseau secondaire (SND) durant ladite seconde fenêtre de temps réservée suivante.

6. Procédé selon l'une quelconque des revendications 1 à 4, dans lequel l'interface de communication est configurée pour permettre une communication conformément à un schéma comprenant une pluralité de premières fenêtres de temps, réservées à une communication par le biais du domaine de réseau primaire (PND), une pluralité de secondes fenêtres de temps, réservées à une communication par le biais du domaine de réseau secondaire (SND), chaque première fenêtre de temps étant séparée de la précédente et de la seconde fenêtre de temps suivante par une fenêtre de temps non réservée,
- chaque message primaire est reçu en utilisant le module esclave virtuel durant une première fenêtre de temps réservée,
- chaque message primaire reçu est traité avant le début de la seconde fenêtre de temps réservée suivante,
- la génération du message de diffuseur est déclenchée durant ladite seconde fenêtre de temps réservée suivante, et
- le message de diffuseur généré est transmis par le biais du domaine de réseau secondaire (SND) durant ladite seconde fenêtre de temps réservée suivante.

7. Procédé pour interconnecter un domaine de réseau primaire (PND) et un domaine de réseau secondaire (SND) par le biais d'un dispositif passerelle (GW), dans lequel :
- le domaine de réseau primaire (PND) est mis en oeuvre dans un système de communication industrielle comprenant un dispositif maître associé à une adresse maîtresse,
- le domaine de réseau secondaire (SND) est mis en oeuvre dans un système de communication en utilisant un protocole de communication OPC UA PubSub et comprenant un dispositif OPC UA physique comprenant un module diffuseur physique associé à un identifiant de diffuseur OPC UA,
- le dispositif passerelle est équipé d'une unité de traitement (CPU) connectée fonctionnellement à une mémoire (MEM) et à une interface de communication (CI) avec le domaine de réseau primaire (PND) et avec le domaine de réseau secondaire (SND), et
- le procédé comprend :
∘ l'émulation d'un dispositif de communication industrielle en utilisant le dispositif passerelle, le dispositif émulé comprenant :
▪ un module esclave virtuel associé à une adresse d'esclave virtuel dans le domaine de réseau primaire (PND), le module esclave virtuel comprenant une première structure de mémoire située dans la mémoire (MEM), et
▪ un module diffuseur OPC UA virtuel associé à un modèle d'informations OPC UA interne stocké dans une seconde structure de mémoire située dans la mémoire (MEM),
∘ en utilisant le module abonné OPC UA virtuel, la réception d'au moins un message d'abonné secondaire comprenant l'identifiant de diffuseur OPC UA et une charge utile de données secondaire,
∘ pour chaque message d'abonné secondaire reçu, en utilisant le message émulé, le traitement dudit message d'abonné secondaire reçu pour stocker la charge utile de données secondaire dans la seconde structure de mémoire conformément au modèle d'informations OPC UA interne,
∘ la génération, en utilisant le module esclave virtuel, d'un message virtuel comprenant l'adresse d'esclave virtuel en tant qu'adresse de source de domaine de réseau primaire (PND), l'adresse maîtresse en tant qu'adresse de destination de domaine de réseau primaire (PND) et une charge utile de données codée, dérivée à partir de chaque charge utile de données secondaire stockée dans la seconde structure de mémoire, et
∘ en utilisant l'interface de communication, transmettre le message virtuel généré par le biais du domaine de réseau primaire (PND) au dispositif maître.

8. Procédé selon la revendication 7, dans lequel le traitement dudit message d'abonné secondaire reçu comprend le déchiffrement dudit message d'abonné secondaire reçu en utilisant une clé de chiffrement sélectionnée sur la base de l'identifiant de diffuseur OPC UA.

9. Procédé selon la revendication 7 ou 8, dans lequel :
- le module diffuseur physique est en outre associé à un identifiant de scripteur de jeu de données spécifique au dispositif OPC UA physique, et
- le traitement dudit message d'abonné secondaire reçu comprend :
∘ le décodage de la charge utile de données secondaire, en utilisant le module abonné OPC UA virtuel, sur la base de l'identifiant de scripteur de jeu de données associé au dispositif OPC UA physique, et
∘ le stockage de la charge utile de données secondaire décodée dans la seconde structure de mémoire conformément au modèle d'informations OPC UA interne.

10. Procédé selon l'une quelconque des revendications 7 à 9, dans lequel :
- la première structure de mémoire comprend une description d'une pluralité de partitions de mémoire,
- chaque partition de mémoire étant mappée sur une ressource distante correspondante dans le domaine de réseau primaire (PND),
- chaque partition de mémoire étant en outre mappée sur une référence correspondante dans le modèle d'informations OPC UA interne stocké dans la seconde structure de mémoire, et
- la génération du message virtuel comprend le codage de la charge utile de données secondaire stockée, en utilisant la description de la pluralité de partitions de mémoire, en un format lisible par le dispositif maître.

11. Procédé selon l'une quelconque des revendications 7 à 10, dans lequel :
- l'interface de communication est configurée pour permettre une communication conformément à un schéma comprenant une pluralité de premières fenêtres de temps, réservées à une communication par le biais du domaine de réseau primaire (PND), une pluralité de secondes fenêtres de temps, réservées à une communication par le biais du domaine de réseau secondaire (SND), chaque première fenêtre de temps étant séparée de la précédente et de la seconde fenêtre de temps suivante par une fenêtre de temps non réservée,
- chaque message d'abonné secondaire est reçu en utilisant le module abonné OPC UA virtuel durant une seconde fenêtre de temps réservée,
- chaque message d'abonné secondaire reçu est traité avant le début de la première fenêtre de temps réservée suivante,
- le traitement de chaque message d'abonné secondaire reçu déclenche la génération du message virtuel avant le début de ladite première fenêtre de temps réservée suivante, et
- le message virtuel généré est transmis par le biais du domaine de réseau primaire (SND) durant ladite première fenêtre de temps réservée suivante.

12. Procédé selon l'une quelconque des revendications 7 à 10, dans lequel l'interface de communication est configurée pour permettre une communication conformément à un schéma comprenant une pluralité de premières fenêtres de temps, réservées à une communication par le biais du domaine de réseau primaire (PND), une pluralité de secondes fenêtres de temps, réservées à une communication par le biais du domaine de réseau secondaire (SND), chaque première fenêtre de temps étant séparée de la précédente et de la seconde fenêtre de temps suivante par une fenêtre de temps non réservée,
- chaque message d'abonné secondaire est reçu en utilisant le module abonné OPC UA virtuel durant une seconde fenêtre de temps réservée,
- chaque message d'abonné secondaire reçu est traité avant le début de la première fenêtre de temps réservée suivante,
- la génération du message virtuel est déclenchée durant ladite première fenêtre de temps réservée suivante, et
- le message virtuel généré est transmis par le biais du domaine de réseau primaire (SND) durant ladite première fenêtre de temps réservée suivante.

13. Programme d'ordinateur comprenant une ou plusieurs séquences d'instructions stockées qui sont accessibles à un processeur et qui, lorsqu'elles sont exécutées par le processeur, amènent le processeur à réaliser les étapes du procédé selon l'une quelconque des revendications 1 à 12.

14. Support de stockage lisible par ordinateur stockant une ou plusieurs séquences d'instructions stockées du programme d'ordinateur selon la revendication 13.

15. Dispositif passerelle équipé d'une unité de traitement (CPU) connectée fonctionnellement à une mémoire (MEM) et à une interface de communication (CI) avec un domaine de réseau primaire (PND) et avec un domaine de réseau secondaire (SND), dans lequel :
- le domaine de réseau primaire (PND) est mis en oeuvre dans un système de communication industrielle comprenant un dispositif maître associé à une adresse maîtresse, et
- le domaine de réseau secondaire (SND) est mis en oeuvre dans un système de communication en utilisant un protocole de communication OPC UA PubSub et comprenant un dispositif OPC UA physique comprenant un module abonné physique,
- le dispositif passerelle étant configuré pour :
∘ émuler un dispositif de communication industrielle en utilisant le dispositif passerelle, le dispositif émulé comprenant :
▪ un module esclave virtuel associé à une adresse d'esclave virtuel dans le domaine de réseau primaire (PND), le module esclave virtuel comprenant une première structure de mémoire qui est située dans la mémoire (MEM), et
▪ un module diffuseur OPC UA virtuel associé à un identifiant de diffuseur OPC UA virtuel dans le domaine de réseau secondaire (SND) et à un modèle d'informations OPC UA interne stocké dans une seconde structure de mémoire située dans la mémoire (MEM),
∘ en utilisant le module esclave virtuel, recevoir à partir du domaine de réseau primaire (PND) au moins un message primaire comprenant l'adresse maîtresse en tant qu'adresse de source de domaine de réseau primaire (PND), l'adresse d'esclave virtuel en tant qu'adresse de destination de domaine de réseau primaire (PND) et une charge utile de données primaire,
∘ pour chaque message primaire reçu, en utilisant le message émulé, traiter ledit message primaire reçu pour stocker la charge utile de données primaire dans la seconde structure de mémoire conformément au modèle d'informations OPC UA interne,
∘ en utilisant le module diffuseur OPC UA virtuel, générer un message de diffuseur comprenant l'identifiant de diffuseur OPC UA virtuel et chaque charge utile de données primaire stockée conformément au modèle d'informations OPC UA interne, et
∘ en utilisant l'interface de communication, transmettre le message de diffuseur généré par le biais du domaine de réseau secondaire (SND) au module abonné physique.
